# EUROPÄISCHE PATENTSCHRIFT

(11) **EP 0 377 426 B1**
(45) Veröffentlichungstag und Bekanntmachung des Hinweises auf die Patenterteilung: **08.06.1994**
(21) Anmeldenummer: 89890262.2
(22) Anmeldetag: 06.10.1989
(51) Int. Cl.: H04M 1/11

(54) **Aufnahmevorrichtung für Telefonapparate od. dgl.**
Holding device for telephone sets or the like
Dispositif de support pour appareils téléphoniques ou similaires

(30) Priorität: 04.01.1989 AT 17/89
(43) Veröffentlichungstag der Anmeldung: 11.07.1990
(73) Patentinhaber: Ernst Stadelmann Gesellschaft m.b.H., A-4070 Eferding (AT)
(72) Erfinder: Kirchner, Balthasar, Dipl.-Agr., A-4070 Eferding (AT)
(74) Vertreter: Hübscher, Heiner, Dipl.-Ing.

(56) Entgegenhaltungen:
- DE-A- 3 306 679
- DE-U- 8 801 001
- FR-A- 1 415 329

## Beschreibung

Die Erfindung bezieht sich auf eine Aufnahmevorrichtung für Telefonapparate od. dgl., bestehend aus einer Schwenksäule, die an einem Ende einen Fußteil zur Befestigung an einer Tischplatte od. dgl. und an dem anderen Ende einen Kopfteil mit einem abwärts geneigten Tragarm zur verstellbaren Halterung einer Aufnahmeplatte od. dgl. aufweist.

Solche Aufnahmevorrichtungen sollen helfen, wertvollen Platz auf dem Schreibtisch zu gewinnen und nicht nur Telefonapparate, Diktiergeräte oder andere Büroutensilien von der Tischplatte wegzubekommen, sondern sie auch beweglich zu machen, um sie bequemer handhaben und besser einsetzen zu können. Außerdem ergibt sich durch diese Aufnahmevorrichtungen gewissermaßen eine zusätzliche Arbeitsetage für den Schreibtisch, deren Beweglichkeit noch dazu die Nutzungsmöglichkeit der in dieser Etage untergebrachten Apparate und Geräte für mehrere Personen eröffnet. Die meisten bekannten Aufnahmevorrichtungen besitzen allerdings horizontale, an einer Wandfläche oder einer Schwenksäule angreifende Tragarme für die Aufnahmeplatte, welche Tragarme als festes Rohr oder als Scherenhebel ausgebildet und daher in ihrer Beweglichkeit auf eine bestimmte Höhenlage beschränkt sind. Die in diesen Aufnahmevorrichtungen untergebrachten Geräte u. dgl. liegen demnach entweder mit genügend Abstand oberhalb des Schreibtisches und sind wenig griffgerecht oder werden bei geringerer Höhe über der Schreibtischplatte durch die Gegenstände auf dem Schreibtisch in ihrer Beweglichkeit beeinträchtigt bzw. schmälern unerwünscht das Platzangebot am Schreibtisch.

Wie die DE-B2-20 51 104 zeigt, gibt es auch schon Aufnahmevorrichtungen aus einer Kombination zweier Parallelogrammhebelführungen zum Tragen der Aufnahmeplatte, was den Bewegungsspielraum zwar beträchtlich vergrößert, aber bei jeder Bewegung der Auflageplatte ein Mitbewegen aller Hebelteile erzwingt, wodurch diese Aufnahmevorrichtungen für ihren Einsatz viel Freiraum verlangen und darüber hinaus auf Grund der großen Zahl der beweglichen Teile aufwendig und nicht sehr stabil sind. Gemäß der DE-C2-27 17 290 wurde auch schon eine Aufnahmevorrichtung mit einem abwärts geneigten Tragarm zur Halterung einer Aufnahmeplatte vorgeschlagen, der wiederum über eine als Kopfteil eingesetzte Parallelogrammhebelführung an der Schwenksäule angelenkt ist. Hier bleibt der Raum zwischen Tragarm und Aufnahmeplatte einerseits und Schwenksäule anderseits bei einer Bewegung der Aufnahmeplatte unbeeinträchtigt, doch ist wegen der Parallelogrammhebel, der erforderlichen Gewichtsausgleichsfeder u. dgl. der Herstellungsaufwand erheblich und eine entsprechende Instabilität der Geräteabstützung in Kauf zu nehmen. Weiters ist aus der DEU-8 801 001 eine Aufnahmevorrichtung für Telefonapparate od. dgl. bekannt, die bereits mit einem waagrecht verlaufenden, längenverstellbaren Teleskopausleger als Tragarm ausgestattet ist, wobei allerdings dieser Teleskopausleger, um den gewünschten Freiraum zu erreichen, mit einer höhenverstellbaren, lotrecht verlaufenden Teleskopsäule verbunden sein muß, so daß wiederum die Handhabung umständlicher, die Herstellung aufwendiger und die Stabilität geringer wird.

Der Erfindung liegt daher die Aufgabe zugrunde, diese Mängel zu beseitigen und eine Aufnahmevorrichtung der eingangs geschilderten Art zu schaffen, die sich durch ihre hohe Festigkeit, ihren besonderen Bedienungskomfort und nicht zuletzt durch die rationelle Herstellungsmöglichkeit und die bei großer Reichweite raumsparende Einsetzbarkeit auszeichnet.

Die Erfindung löst diese Aufgabe dadurch, daß der Kopfteil starr an der Schwenksäule abgestützt und mit einem abwärts geneigt verlaufenden, längenverstellbaren Teleskopausleger als Tragarm ausgestattet ist. Es entsteht eine gelenkfreie, aus wenigen aufwandsarm zu fertigenden und montierenden Teilen zusammengesetzte Vorrichtung, die eine sehr feste und hochbelastbare Aufnahme für Telefonapparate u. dgl. ergibt. Dabei ist durch die Längenverstellbarkeit des geneigt verlaufenden Teleskopauslegers einerseits und die Drehbarkeit der Schwenksäule anderseits eine allen Anforderungen gerecht werdende Beweglichkeit der am freien Auslegerende sitzenden Aufnahmeplatte gewährleistet, und das auf der Aufnahmeplatte untergebrachte Gerät kann bequem durch einfaches Heranziehen oder Wegschieben in die gewünschte Nutzungsposition oder daraus wegbewegt werden. Da beim Heranziehen des Telefons od. dgl. die Aufnahmeplatte, dem Teleskopausleger folgend, schräg von oben herabgeführt wird, bleibt auch der Schreibtischbereich unterhalb des Auslegers bis zur Schwenksäule unbeeinträchtigt und, da zum Schwenken der Aufnahmevorrichtung der Teleskopausleger zusammengeschoben und die Aufnahmeplatte daher entsprechend angehoben und in die Nähe der Schwenksäule gebracht werden kann, ist auch eine Behinderung des Schwenkbereiches der Aufnahmevorrichtung durch eine voll belegte Schreibtischplatte nicht zu befürchten. Eine Abstimmung der Reibungsverhältnisse im Teleskopausleger und/oder geeignet vorzusehende Rasten und Anschläge erlauben ein stufenloses Verstellen der Aufnahmeplatte mit definierten End- und Zwischenpositionen und, unabhängig davon, ob der Fußteil für eine Klemmung an einer Tischplatte, eine Befestigung an einer Wandfläche od. dgl. ausgelegt ist, kommt es zu einer funktionell einwandfreien, optisch ansprechenden Aufnahmevorrichtung für Telefonapparate od. dgl. mit praktisch beliebigiger, nur nach ergonomischen Gesichtspunkten auszuwählender Reichweite.

Besteht erfindungsgemäß der Kopfteil aus einem spitzwinkelig an der Schwenksäule angeformten Rohrstutzen, der auch den ersten von vorzugsweise drei Teleskopteilen des Auslegers bildet, ergibt sich eine sehr zweckmäßige und stabile Konstruktion der Aufnahmevorrichtung, die sich bestens zur Herstellung aus Kunststoff eignet.

Um ein ungewolltes Verdrehen der Aufnahmeplatte um die Längsachse des Teleskopauslegers zu verhindern und eine exakte Führung der Teleskopteile zu erreichen, weisen vorteilhafterweise Rohrstutzen und Teleskopteile einen von der Kreisform abweichenden, vorzugsweise ovalen Querschnitt auf.

Zur Steigerung der Beweglichkeit kann erfindungsgemäß die Aufnahmeplatte um eine Vertikalachse schwenkbar in einer am Endteil dieses Teleskopauslegers vorgesehenen Konsole gelagert sein, und es ist auch möglich, die Aufnahmeplatte in der Konsole oder die Konsole am Endteil um eine Horizontalachse schwenkverstellbar zu lagern, so daß der auf die Aufnahmeplatte gestellte Apparat od. dgl. jeweils exakt in die gewünschte Position gebracht werden kann und höchster Bedienungskomfort geboten wird. Selbstverständlich läßt sich die Aufnahmeplatte mit zusätzlichen Haltebügeln für das Gerät, einem Handgriff u. dgl. ausstatten, um eine sichere Halterung des Gerätes auf der Aufnahmeplatte und deren leichtes Greifen und Handhaben zu gewährleisten.

Nach einer günstigen Ausgestaltung der Erfindung setzt sich die Schwenksäule aus einem Hüllprofil und einer im Fußteil drehfest verankerten Stützachse zusammen, welches Hüllprofil über Lagerbüchsen drehbar auf der Stützachse aufgesteckt und vorzugsweise mit einer Klemmeinrichtung ausgerüstet ist. Die vorzugsweise metallene Stützachse steigert die Stabilität und Belastbarkeit der Aufnahmevorrichtung und erlaubt eine nicht nur funktionelle, sondern auch formschöne Ausgestaltung des Hüllprofils. Das Zusammenbauen der Aufnahmevorrichtung wird erleichtert und eine Klemmeinrichtung ermöglicht es, die Leichtgängigkeit der Schwenkbewegung bis zum Festklemmen einzustellen.

Besteht die Klemmeinrichtung aus einem im Hüllprofil verschwenkbar eingesetzten, eine der Lagerbüchsen umschließenden Stellring, der innenseitig exzentrische Ausnehmungen bildet und mit außenseitigen Druckwarzen od. dgl. der vorzugsweise im Stellringbereich Axialschlitze aufweisenden Lagerbüchse zusammenwirkt, kommt es zu einer einfachen, effektvollen Konstruktion der Klemmeinrichtung, wobei ein Verdrehen des Stellringes ein mehr oder weniger starkes Zusammendrücken der Lagerbüchse und damit eine entsprechende Bremsung der Schwenkbewegung mit sich bringt.

In der Zeichnung ist der Erfindungsgegenstand beispielsweise veranschaulicht, und zwar zeigen
- Fig. 1: eine erfindungsgemäße Aufnahmevorrichtung in teilgegeschnittener Seitenansicht,
- Fig. 2: den Teleskopausleger dieser Aufnahmevorrichtung mit geänderter Auszugsweite, ebenfalls in teilgeschnittener Seitenansicht und
- Fig. 3: einen Querschnitt nach der Linie III-III der Fig. 1 im größeren Maßstab.

Die veranschaulichte Aufnahmevorrichtung 1 für Telefonapparate od. dgl. besteht aus einer Schwenksäule 2, die einerends einen Fußteil 3 und andernends einen Kopfteil 4 mit einem abwärts geneigt verlaufenden Teleskopausleger aufweist. Der Fußteil 3 ist beispielsweise als Schraubzwinge 6 zur Befestigung an einer Tischplatte 7 ausgebildet, er könnte aber auch nur mit einem Flansch zur direkten Schraubbefestigung an einer Platte, einer Wandfläche od. dgl. ausgerüstet sein. Als Kopfteil 4 gibt es einen spitzwinkelig an der Schwenksäule 2 angeformten Rohrstutzen 8, der gleichzeitig als Teleskopteil für den Teleskopausleger 5 dient. Dieser Teleskopausleger 5 setzt sich insgesamt aus drei Teleskopteilen zusammen, nämlich dem Rohrstutzen 8 als ersten Teil, einem Mittelteil 9 und einem Endteil 10, wobei der Endteil 10 eine Konsole 11 mit einem Schwenklager 12 zur Abstützung einer Aufnahmeplatte 13 trägt. Diese Aufnahmeplatte 13 wird durch das Schwenklager 12 um eine Vertikalachse drehbar abgestützt und dient zur Halterung eines Telefonapparates od. dgl.. Ein Handgriff 14 erleichtert nicht nur die Handhabung der Aufnahmeplatte 13 und der Aufnahmevorrichtung 1, sondern eignet sich auch als Ablage für den Telefonhörer od. dgl..

Um ein Kippen der Konsole 11 um die Auslegerlängsachse zu verhindern, besitzen die Teleskopteile 8, 9, 10 ovalen oder polygonalen Querschnitt und geeignete Rasten und Anschläge 15, 16, 17, 18, 19, 20, 21, 22, 23 begrenzen einerseits den Teleskopausleger-Auszug und definieren anderseits drei bestimmte Auszugsstellungen, zwischen denen der Teleskopausleger 5 und damit die Aufnahmeplatte 13 stufenlos verstellt werden kann. Eine entsprechende gegenseitige Abstimmung der Passungen und Reibungsverhältnisse der Teile bringt eine ausreichende Selbsthemmung mit sich, die auch bei stärkerer Belastung der Aufnahmeplatte 13 das Einhalten jeder gewünschten Auszugsposition sicherstellt.

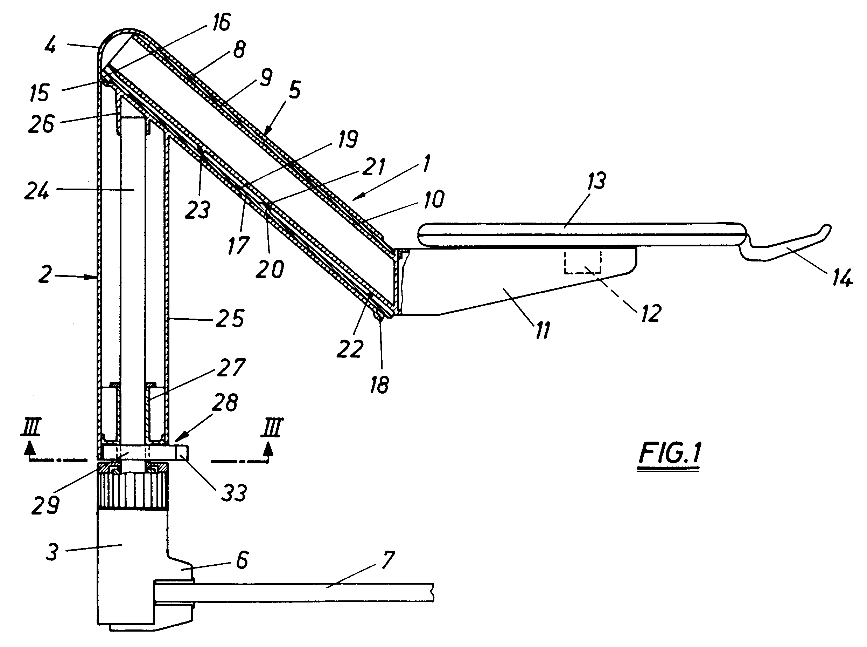

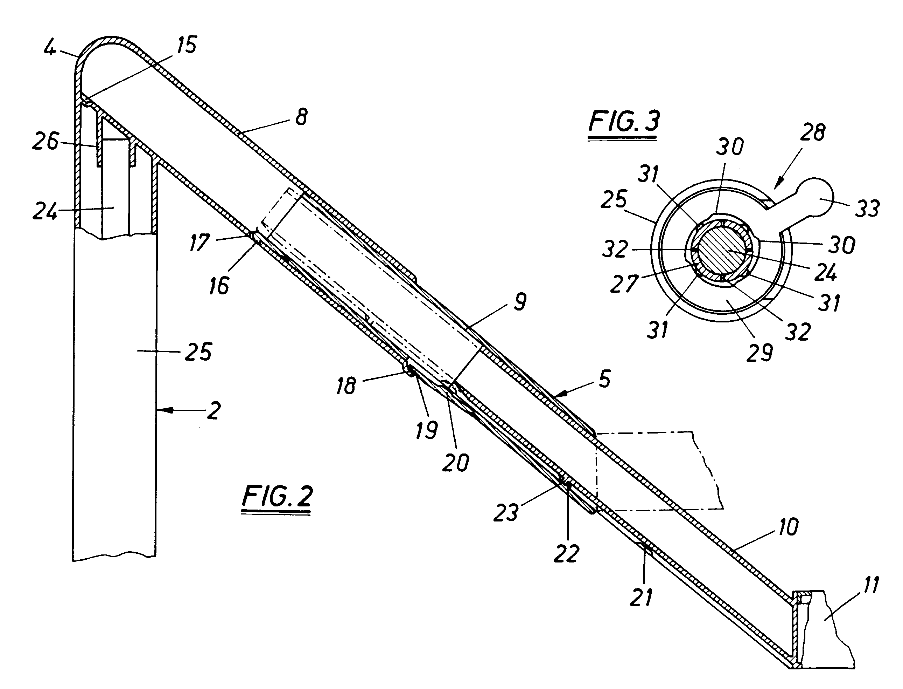

Durch den Teleskopausleger 5 kann die Aufnahmeplatte 13 und mit ihr der Telefonapparat od. dgl. einfach und bequem in Auslegerrichtung bewegt werden, wobei das Heranziehen die Aufnahmeplatte 13 in Tischplattennähe und daher in eine benützungsgerechte Lage bringt, das Zurückschieben hingegen den Teleskopausleger 5 kürzt und Aufnahmeplatte samt Apparat von der Tischplatte 7 relativ weit abhebt, so daß wertvoller Arbeitsplatz auf der Tischplatte erhalten bleibt, wie ein Vergleich zwischen den Auszugsstellungen gemäß Fig. 1 und 2 verdeutlicht.

Zusätzlich zur Längsbewegung in Auslegerrichtung kann die Aufnahmeplatte 13 wegen des Ansatzes des Teleskopauslegers 5 an der Schwenksäule 2 auch um die Säulenachse beliebig verdreht werden, was die Beweglichkeit der Aufnahmevorrichtung 1 entsprechend steigert. Um eine stabile Abstützung zu erreichen, setzt sich die Schwenksäule 2 aus einer im Fußteil 3 in nicht weiter dargestellter Weise drehfest verankerten Stützachse 24 und einem Hüllprofil 25 zusammen, wobei das Hüllprofil 25 mit dem Rohrstutzen 8 einstückig hergestellt ist und über Lagerbüchsen 26, 27 auf die Stützachse 24 aufgesteckt wird. Eine Klemmeinrichtung 28 erlaubt dabei die Schwenkbarkeit des Hüllprofils 25 um die Stützachse 24 zu bremsen und die Leichtgängigkeit dieser Schwenkbewegung wunschgemäß zu beeinflussen bzw. die ganze Aufnahmevorrichtung 1 in einer bestimmten Schwenkstellung zu fixieren.

Die Klemmeinrichtung 28 besteht aus einem im unteren Endbereich des Hüllprofils 25 schwenkbar eingesetzten, einen frei vorkragenden Abschnitt der Lagerbüchse 27 umschließenden Stellring 29, der innenseitig exzentrische Ausnehmungen 30 aufweist, die mit außenseitigen Druckwarzen 31 der Lagerbüchse 27 zusammenwirken. Um die Elastizität der Lagerbüchse 27 zu erhöhen, sind zwischen den Druckwarzen 31 Axialschlitze 32 vorgesehen, so daß ein Verschwenken des Stellringes 29, das ein Betätigungshebel 33 erleichtert, durch das Zusammenspielen der exzentrischen Ausnehmungen 30 mit den Druckwarzen 31 den innerhalb des Stellringes 29 liegenden Bereich der Lagerbüchse 27 mehr oder weniger zusammendrückt und dadurch die Drehbarkeit des Hüllprofils 25 gegenüber der Stützachse 24 behindert.

Die erfindungsgemäße Aufnahmevorrichtung 1 zeichnet sich durch ihre Stabilität, ihre aufwandsarme Herstellung, ihre platzsparende Einsatzmöglichkeit, ihren Bedienungskomfort und nicht zuletzt durch ihre zweckgebundene Formschönheit aus.

## Patentansprüche

1. Aufnahmevorrichtung (1) für Telefonapparate od. dgl., bestehend aus einer Schwenksäule (2), die an einem Ende einen Fußteil (3) zur Befestigung an einer Tischplatte (7) od. dgl. und an dem anderen Ende einen Kopfteil (4) mit einem abwärts geneigten Tragarm (5) zur verstellbaren Halterung einer Aufnahmeplatte (13) od. dgl. aufweist, dadurch gekennzeichnet, daß der Kopfteil (4) starr an der Schwenksäule (2) abgestützt und mit einem abwärts geneigt verlaufenden, längenverstellbaren Teleskopausleger (5) als Tragarm ausgestattet ist.

2. Aufnahmevorrichtung nach Anspruch 1, dadurch gekennzeichnet, daß der Kopfteil (4) aus einem spitzwinkelig an der Schwenksäule (2) angeformten Rohrstutzen (8) besteht, der auch den ersten von vorzugsweise drei Teleskopteilen (8, 9, 10) des Auslegers (5) bildet.

3. Aufnahmevorrichtung nach Anspruch 2, dadurch gekennzeichnet, daß Rohrstutzen (8) und Teleskopteile (9, 10) einen von der Kreisform abweichenden, vorzugsweise ovalen Querschnitt aufweisen.

4. Aufnahmevorrichtung nach einem der Ansprüche 1 bis 3, dadurch gekennzeichnet, daß die Aufnahmeplatte (13) od. dgl. um eine Vertikalachse schwenkbar in einer am Endteil (10) des Teleskopauslegers (5) vorgesehenen Konsole (11) gelagert ist.

5. Aufnahmevorrichtung nach Anspruch 4, dadurch gekennzeichnet, daß die Aufnahmeplatte (13) od. dgl. in der Konsole (11) oder die Konsole (11) am Endteil (10) um eine Horizontalachse schwenkverstellbar gelagert ist.

6. Aufnahmevorrichtung nach einem der Ansprüche 1 bis 5, dadurch gekennzeichnet, daß sich die Schwenksäule (2) aus einem Hüllprofil (25) und einer im Fußteil (3) drehfest verankerten Stützachse (24) zusammensetzt, welches Hüllprofil (25) über Lagerbüchsen (26, 27) drehbar auf der Stützachse (24) aufgesteckt und vorzugsweise mit einer Klemmeinrichtung (28) ausgerüstet ist.

7. Aufnahmevorrichtung nach Anspruch 6, dadurch gekennzeichnet, daß die Klemmeinrichtung (28) aus einem im Hüllprofil (25) verschwenkbar eingesetzten, eine der Lagerbüchsen (27) umschließenden Stellring (29) besteht, der innenseitig exzentrische Ausnehmungen (30) bildet und mit außenseitigen Druckwarzen (31) od. dgl. der vorzugsweise im Stellringbereich Axialschlitze (32) aufweisenden Lagerbüchse (27) zusammenwirkt.

## Claims

1. A holder means (1) for telephones or the like, comprising a swing column (2) having a base part (3) at one end for fixing to a table top (7) or the like, and having at the other end a head part (4) with a downwardly inclined support arm (5) for the adjustable support of a holder plate (13) or the like, characterised in that the head part (4) bears rigidly against the swing column (2) and the support arm (5) comprises a downwardly inclined longitudinally adjustable telescopic arm (5).

2. A holder means according to claim 1, characterised in that the head part (4) consists of a tubular member (8) formed integrally on the swing column (2) at an acute angle, said tubular member also forming the first of preferably three telescopic parts (8, 9, 10) of the arm (5).

3. A holder means according to claim 2, characterised in that the tubular member (8) and telescopic parts (9, 10) have a cross-section which differs from the circular and which is preferably oval.

4. A holder means according to any one of claims 1 to 3, characterised in that the holder plate (13) or the like is mounted to swing about a vertical axis in a bracket (11) provided at the end part (10) of the telescopic arm (5).

5. A holder means according to claim 4, characterised in that the holder plate (13) or the like is mounted in the bracket (11) or the bracket (11) is mounted on the end part (10) so as to be pivotally adjustable about a horizontal axis.

6. A holder means according to any one of claims 1 to 5, characterised in that the swing column (2) is made up of a casing section (25) and a support shaft (24) anchored in the base part (3) so as to be relatively non-rotatable, the casing section (25) being fitted on the support shaft (24) so as to be rotatable through the agency of bearing bushes (26, 27) and being preferably equipped with a clamping means (28).

7. A holder means according to claim 6, characterised in that the clamping means (28) consists of an adjusting ring (29) pivotally inserted in the casing section (25) and enclosing one of the bearing bushes (27), said ring (29) forming eccentric recesses (30) on the inside and co-operating with external pressure projections (31) or the like of the bearing bush (27), which preferably has axial slots (32) in the region of the adjusting ring.

## Revendications

1. Dispositif de support (1) pour poste de téléphone ou analogues, constitué par une colonne pivotante (2), présentant à une extrémité une partie de pied (3), destinée à la fixation à une plaque de table (7) ou analogue, et à l'autre extrémité, une partie de tête (4), avec un bras de support (5), incliné vers le bas, destiné à la fixation, réglable, d'une plaque support (13), ou analogue,
caractérisé en ce que la partie de tête (4) prend appui de façon rigide sur la colonne pivotante (2) et est équipée d'un bras articulé télescopique (5), faisant office de bras de support, s'étendant incliné vers le bas et réglable en longueur.

2. Dispositif de support selon la revendication 1,
caractérisé en ce que la partie de tête (4) est composée d'une tubulure (8) formée d'un seul tenant, en formant un angle aigu, sur la colonne pivotante (2), et constituant également le premier des éléments télescopiques (8, 9, 10), de préférence au nombre de trois, du bras articulé (5).

3. Dispositif de support selon la revendication 2,
caractérisé en ce que la tubulure (8) et les éléments télescopiques (9, 10) présentent une section transversale, s'écartant de la forme circulaire, de préférence ovale.

4. Dispositif de support selon l'une des revendications 1 à 3,
caractérisé en ce que la plaque de support (13) ou analogue, est susceptible de pivoter autour d'un axe vertical, en tourillonnant dans une console (11), prévue sur la partie d'extrémité (10) du bras articulé télescopique (5).

5. Dispositif de support selon la revendication 4,
caractérisé en ce que la plaque de support (13) ou analogue tourillonne dans la console (11), ou bien que la console (11) tourillonne sur la partie d'extrémité (10), autour d'un axe horizontal, avec un pivotement réglable.

6. Dispositif de support selon l'une des revendications 1 à 5,
caractérisé en ce que la colonne pivotante (2) est composée d'un profilé enveloppe (25) et d'une axe de rotation (24) ancré, bloqué en rotation, dans la portie de pied (3) et enfiché, de façon à pouvoir tourner, sur l'axe d'appui (24) et équipé de préférence d'un dispositif de serrage (28).

7. Dispositif de support selon la revendication 4,
caractérisé en ce que le dispositif de serrage (28) est composé d'une bague de réglage (29), insérée à pivotement dans le profilé enveloppe (25) et entourant l'une des douilles de palier (27) et formant intérieurement des évidements (30) excentriques ou analogues, et coopérant avec des boutons de pressage (31), ou analogues, de la douille de palier (27) présentant de préférence des fentes axiales (32) dans la zone de la bague de réglage.
